# EUROPÄISCHE PATENTANMELDUNG

(11) **EP 1 162 359 A2**
(43) Veröffentlichungstag der Anmeldung: **12.12.2001**
(21) Anmeldenummer: 01113757.7
(22) Anmeldetag: 05.06.2001
(51) Int. Cl.: F02D 41/14, G01N 27/416, G01N 27/419

(54) **Verfahren und Anordnung zur Regelung des Luft-Kraftstoff-Verhältnisses eines einem Verbrennungsprozess zuzuführenden Gemisches**

(30) Priorität: 06.06.2000 DE 10027897
(71) Anmelder: Delphi Technologies, Inc., Troy, MI 48007 (US)
(72) Erfinder: Engel, Joseph, 4671 Oberkorn (LU); Pavan, Ramon, 3377 Leudelange (LU); Wesquet, Alain, 8545 Niederpallen (LU)
(74) Vertreter: Manitz, Finsterwald & Partner GbR

(57) **Zusammenfassung**

Die Erfindung betrifft ein Verfahren und eine Anordnung zur Regelung des Luft-Kraftstoff-Verhältnisses eines einem Verbrennungsprozeß zuzuführenden Gemisches. Bei dem Verfahren und bei der Anordnung wird basierende auf der Konzentration zumindest einer Komponente ein Meßsignal erzeugt, das anschließend ausgewertet wird und auf dessen Grundlage das Luft-Kraftstoff-Verhältnis des dem weiteren Verbrennungsprozeß zuzuführenden Gemisches nachgeregelt wird. Die Auswertung des Meßsignals erfolgt durch einen programmierten Algorithmus.

## Beschreibung

Die Erfindung betrifft ein Verfahren zur Regelung des Luft-Kraftstoff-Verhältnisses eines einem Verbrennungsprozeß zuzuführenden Gemisches, insbesondere in einem Verbrennungsmotor, die auf der Konzentration zumindest einer Komponente des während des Verbrennungsprozesses entstandenen Abgases basiert, wobei bei dem Verfahren die Konzentration der betreffenden Abgaskomponente erfaßt, entsprechend der erfaßten Konzentration ein Meßsignal erzeugt, das Meßsignal anschließend ausgewertet, und das Luft-Kraftstoff-Verhältnis des dem weiteren Verbrennungsprozeß zuzuführenden Gemisches nachgeregelt wird, wenn das ausgewertete Meßsignal von einem vorgegebenen Wert abweicht. Ferner betrifft die Erfindung eine Anordnung nach dem Oberbegriff des Anspruchs 14 zur Regelung des Luft-Kraftstoff-Verhältnisses eines einem Verbrennungsprozeß zuzuführenden Gemisches.

Das eingangs genannte Verfahren und die eingangs genannte Anordnung werden insbesondere bei Verbrennungsmotoren zur Regelung des Luft-Kraftstoff-Verhältnisses des den Zylindern des Verbrennungsmotors zuzuführenden Gemisches aus Luft und Kraftstoff eingesetzt. Üblicherweise wird zu diesem Zweck eine Abgassonde verwendet, die die Konzentration zumindest einer Komponente des während des Verbrennungsprozesses entstandenen Abgases erfaßt und mit der Konzentration eines Referenzgases vergleicht. Bei Verbrennungsmotoren wird zu diesem Zweck üblicherweise die Konzentration der im Abgas enthaltenen Sauerstoffmoleküle mit der Konzentration der in der Umgebungsluft enthaltenen Sauerstoffmoleküle verglichen. Durch den Konzentrationsunterschied ergibt sich ein Meßsignal, beispielsweise eine Spannung, die als Grundlage für die Nachregelung des Luft-Kraftstoff-Verhältnisses des dem weiteren Verbrennungsprozeß zuzuführenden Gemisches verwendet wird.

Bei den bekannten Verfahren wird zur Regelung des Luft-Kraftstoff-Verhältnisses eine anwendungsspezifische Schaltung (= ASIC) eingesetzt, die an die Randbedingungen des Verbrennungsprozesses bzw. des Verbrennungsmotors, wie beispielsweise an den Motortyp, an die Abgassonde, an die eingesetzte Abgasanlage und an die verwendete Einspritzanlage, angepaßt ist und nur für diesen besonderen Anwendungsfall verwendet werden kann.

Es ist Aufgabe der Erfindung, ein Verfahren zur Regelung des Luft-Kraftstoff-Verhältnisses eines einem Verbrennungsprozeß zuzuführenden Gemisches bzw. eine Anordnung für eine derartige Regelung anzugeben, das bzw. die ohne großen Aufwand an geänderte Randbedingungen der Regelung angepaßt werden kann.

Die Erfindung löst die Aufgabe durch ein Verfahren mit den Merkmalen nach Anspruch 1 und insbesondere dadurch, daß die Auswertung des Meßsignals durch einen programmierten Algorithmus erfolgt. Ferner wird die Aufgabe durch eine Anordnung mit den Merkmalen nach Anspruch 14 gelöst.

Bei der Erfindung erfolgt die Auswertung des Meßsignals der Abgassonde, mit dem die Konzentration der betreffenden Abgaskomponente angegeben wird, mit Hilfe des programmierten Algorithmus der Rechnereinheit. Durch die Verwendung der programmierbaren Rechnereinheit, kann der Algorithmus, mit dem die Auswertung des Meßsignal erfolgt, ohne großen Aufwand an unterschiedliche Randbedingungen der Regelung angepaßt werden. Wird beispielsweise bei einem Verbrennungsmotor ein anderer Sensortyp eingesetzt, um das Abgas zu überwachen, ist es nicht wie bisher üblich erforderlich, eine auf diesen besonderen Anwendungsfall ausgelegte Schaltungsanordnung zu entwickeln und zu fertigen. Vielmehr kann durch einfaches Umprogrammieren des Algorithmus die Regelung an die geänderten Randbedingungen angepaßt werden. Darüber hinaus ist es auch möglich, mit Hilfe des programmierten Algorithmus ohne großen Aufwand eine Überwachung und Nachjustierung des Abgassensors vorzunehmen, wenn dessen Meßsignale beispielsweise aufgrund seiner hohen Einsatzdauer oder aufgrund von Fertigungstoleranzen von den Meßsignalen typengleicher Abgassensoren abweicht. Des weiteren sind eventuell erforderliche Änderungen oder Aktualisierungen des Auswertungsverfahrens für das Meßsignal schnell und auf einfache Weise möglich.

Weitere vorteilhafte Weiterbildungen der Erfindung ergeben sich aus der nachfolgenden Beschreibung, der Zeichnung sowie den Unteransprüchen.

So wird bei einer bevorzugten Ausführungsform des Verfahrens das Luft-Kraftstoff-Verhältnis des dem weiteren Verbrennungsprozeß zuzuführenden Gemisches entsprechend einem Stellsignal nachgeregelt, mit dem die zu messende Konzentration der Abgaskomponente derart eingestellt wird, daß das Meßsignal dem vorgegebenen Wert entspricht. Bei dieser Weiterbildung des Verfahrens ist die Verwendung einer sogenannten Breitbandsonde möglich, die sich insbesondere dadurch auszeichnet, daß sie über einen weiten λ-Bereich, mit einer Luftzahl λ in einem Bereich von 0,7 bis 4, ein eindeutiges, linear ansteigendes Signal zeigt, auf dessen Grundlage das Luft-Kraftstoff-Verhältnis des dem weiteren Verbrennungsprozeß zuzuführenden Gemisches bestimmt und entsprechend nachgeregelt werden kann.

Auch bei dieser Weiterbildung des Verfahrens wird vorgeschlagen, das Stellsignal durch den programmierten Algorithmus einzustellen. Hierzu ist es von Vorteil, wenn das Stellsignal nach dem Auswerten des Meßsignals erfaßt und mit Hilfe des programmierten Algorithmus zum Nachregeln des Luft-Kraftstoff-Verhältnisses ausgewertet wird. Auf diese Weise ist sichergestellt, daß das Luft-Kraftstoff-Verhältnis während des weiteren Verbrennungsprozesses sehr genau eingestellt werden kann, damit die Luftzahl λ zumindest annähernd gleich 1 ist.

Die zuvor beschriebene Nachregelung des Luft-Kraftstoff-Verhältnisses mit Hilfe des Stellsignals wird vorzugsweise nur während eines zumindest annähernd stationären Verlaufes des Verbrennungsprozesses durchgeführt, bei dem die Luftzahl λ in einem Bereich von etwa 0,95 bis 1,05 liegt, da mit diesem Nachregelungsverfahren des Luft-Kraftstoff-Verhältnisses eine sehr genaue Regelung möglich ist.

Verläuft der Verbrennungsprozeß dagegen instationär, d.h., daß die Luftzahl λ vorzugsweise kleiner als 0, 95 oder größer als 1, 05 ist, wird vorgeschlagen, das Stellsignal vorab so einzustellen, daß die Konzentration der zu messenden Abgaskomponente einem Wert entspricht, wie er sich bei Verbrennung des dem Verbrennungsprozeß unmittelbar zuvor zugeführten Gemisches ergibt, bei dem die Luftzahl λ deutlich kleiner als 0,95 oder größer als 1,05 ist.

Ein solcher Fall ergibt sich bei einem Verbrennungsmotor beispielsweise dann, wenn der Verbrennungsmotor stark beschleunigt wird, indem dem Verbrennungsmotor ein fettes Gemisch mit einem hohen Kraftstoffanteil zugeführt wird. Durch die vom Stellsignal verursachte Konzentrationsänderung der zu messenden Abgaskomponente wird das Meßsignal verstellt, so daß es von seinem vorgegebenen Wert abweicht. Im nachfolgenden Regelvorgang wird das Meßsignal zunächst ausgewertet und mit dem vorgegebenen Wert verglichen. Anschließend wird entsprechend der Abweichung des Meßsignals von dem vorgegebenen Wert das Luft-Kraftstoff-Verhältnis des dem weiteren Verbrennungsprozeß nachfolgend zuzuführenden Gemisches auf ein vorgegebenes Verhältnis eingestellt, bei dem die Luftzahl λ wieder in dem Bereich von 0,95 bis 1,05 liegt, wobei dieser Vorgang des Nachregelns vorzugsweise in kleinen Schritten erfolgt, um einen sanften Übergang bei der Verstellung des Luft-Kraftstoff-Verhältnisses zu erreichen.

Durch das zuvor beschriebene Verfahren wird ermöglicht, daß die Meßeinrichtung, beispielsweise die Abgassonde, die die Konzentration der Abgaskomponente ermittelt, gezielt verstellt bzw. vorgespannt wird, um eine frühzeitige Nachregelung des Gemisches zu erreichen, wodurch die Totzeit der Regelung bei plötzlichen Änderungen des Luft-Kraftstoff-Verhältnisses im Verbrennungsprozeß verglichen mit bekannten Verfahren verkürzt ist.

Das zuvor beschriebene Verfahren eignet sich insbesondere bei Verbrennungsmotoren, bei denen beispielsweise während eines Beschleunigungsvorganges das Gemisch mit Kraftstoff angereichert wird, so daß die Luftzahl λ deutlich unter einem Wert von 0,95 liegt. Aufgrund der Strömungsgeschwindigkeit und der Wegstrecke, die das Gemisch beginnend am Einspritzpunkt bis zum Abgassensor zurücklegen muß, kann die Abgassonde die Konzentration der zu messenden Abgaskomponente nur verzögert erfassen. Diese Verzögerung entspricht einer Totzeit, in der zwar bereits ein Gemisch mit ungünstiger Luftzahl λ im Verbrennungsprozeß vorliegt, die Abgassonde jedoch noch die Zusammensetzung des Abgases zuvor erfolgter Verbrennungsprozesse erfaßt. Mit Hilfe der gezielten Verstellung des Meßsignals, sobald der Verbrennungsprozeß instationär abläuft, wird erreicht, daß die Nachregelung bereits unmittelbar nachdem der Verbrennungsprozeß einen instationären Verlauf zeigt, das Gemisch entsprechend nachgeregelt werden kann. Auf diese Weise kann insbesondere bei Verwendung des erfindungsgemäßen Verfahrens in einem Verbrennungsmotor der Motorbetrieb gezielt überwacht und verglichen mit den bekannten Verfahren noch genauer eingestellt werden. Darüber hinaus können Fehler bei der Einspritzung ermittelt und die Abgasemission gezielt vermindert werden. Ferner können die Regelungsparameter des Verbrennungsprozesses, wie beispielsweise die einzuspritzende Kraftstoffmenge, der Einspritzzeitpunkt und ähnliches, schneller und genauer nachgeregelt werden.

Des weiteren wird vorgeschlagen, um die Meßgenauigkeit des Verfahrens zu überprüfen, das Stellsignal vorab derart einzustellen, daß das Meßsignal von seinem vorgegebenen Wert abweicht. Anschließend wird das Meßsignal ausgewertet, wobei das Stellsignal so lange deaktiviert wird, bis das Meßsignal die tatsächliche Konzentration des Abgases anzeigt. Sobald das Meßsignal die tatsächliche Konzentration des Abgases erfaßt, wird das Stellsignal erneut aktiviert und so eingestellt, daß das Meßsignal dem vorgegebenen Wert erneut entspricht. Durch Vergleichen der durch das Stellsignal ermittelten Konzentration mit der durch das Meßsignal ermittelten Konzentration kann die Meßgenauigkeit der Meßeinrichtung überprüft werden.

Des weiteren wird vorgeschlagen, daß der Algorithmus in Abhängigkeit von der einem vorausgegangenen Meßvorgang ermittelten Abgaskonzentration das Meßsignal und, sofern gegeben, auch das Stellsignal wahlweise auf Grundlage von Proportionalitätsgleichungen, durch Integration und/oder durch Differentiation auswertet bzw. einstellt. Hierdurch ist es möglich, daß entsprechend der ermittelten Abgaskonzentration jeweils das Auswerte- und Einstellungsverfahren ausgewählt wird, das schnellstmöglich eine geeignete Regelung des Luft-Kraftstoff-Verhältnisses des Gemisches durchführen kann.

Wird das erfindungsgemäße Verfahren bei einem Verbrennungsmotor eingesetzt, ist es besonders von Vorteil, wenn für jeden Zylinder das Luft-Kraftstoff-Verhältnis des dem jeweiligen Zylinder zuzuführenden Gemisches nachgeregelt wird. Auf diese Weise können Abweichungen zwischen den einzelnen Zylindern ausgeglichen und die Leistung der Zylinder aneinander angeglichen werden.

Einen weiteren Schwerpunkt der Erfindung stellt eine Anordnung dar, die zur Regelung des Luft-Kraftstoff-Verhältnisses eines einem Verbrennungsprozeß zuzuführenden Gemisches dient. Die Anordnung weist eine Abgassonde auf, mit der ein die Konzentration zumindest einer Komponente des entstandenen Abgases anzeigendes Meßsignal erzeugt wird. Die Nachregelung des Luft-Kraftstoff-Verhältnisses erfolgt durch eine Regelungseinheit, die bei einer Abweichung des Meßsignals von einem vorgegebenen Wert das dem weiteren Verbrennungsprozeß zuzuführende Gemisch neu einstellt. Zum Auswerten des Meßsignals wird eine programmierbare Rechnereinheit eingesetzt.

Als Abgassonde wird vorzugsweise eine Breitbandsonde verwendet, die aus einer Meßzelle und einer Pumpenzelle gebildet ist. Mit Hilfe der Pumpenzelle kann die Konzentration der von der Meßzelle zu erfassenden Abgaskomponente gezielt so eingestellt werden, daß das Meßsignal der Meßzelle dem vorgegebenen Wert entspricht. Auf Grundlage des Stellsignals, durch das die Pumpenzelle die Konzentration der zu messenden Abgaskomponente einstellt, ermittelt die programmierbare Rechnereinheit der Regelungseinheit, inwieweit das Luft-Kraftstoff-Verhältnis des Gemisches nachgeregelt werden muß.

Die zuvor beschriebene Anordnung eignet sich insbesondere bei der Verwendung in einem Verbrennungsmotor eines Kraftfahrzeuges. Bei diesem Anwendungsfall wird zum Einstellen des Luft-Kraftstoff-Verhältnisses des Gemisches der dem Gemisch zuzuführende Kraftstoff nachgeregelt.

Nachfolgend wir die Erfindung anhand eines Ausführungsbeispiels unter Bezugnahme auf die Zeichnung näher erläutert. Darin zeigen:
- Fig. 1: eine schematische Schnittdarstellung einer Breitbandsonde, die mit Hilfe einer Meßzelle und einer Pumpzelle die Konzentration einer Abgaskomponente erfaßt,
- Fig. 2: ein Diagramm, in dem der Verlauf des an die Pumpzelle anzulegenden Pumpstroms bezogen auf die Luftzahl λ dargestellt ist, und
- Fig. 3: eine Anordnung zur Regelung des Luft-Kraftstoff-Verhältnisses eines einem Verbrennungsmotor zuzuführenden Gemisches.

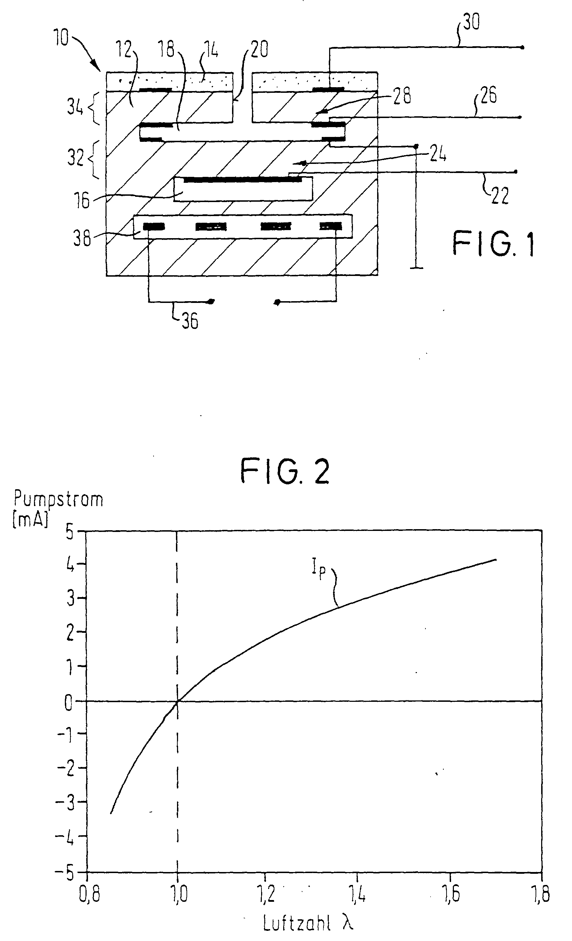

In Fig. 1 ist eine Breitbandsonde 10 gezeigt, die in Kraftfahrzeugen zum Erfassen der Sauerstoffkonzentration im Abgas verwendet wird.

Die Breitbandsonde 10 ist aus einem Festelektrolyt 12 wie beispielsweise Zirkon-Dioxid gebildet, und weist an ihrer dem Abgas zugewandten Stirnseite eine Schutzschicht 14 auf, die den Festelektrolyt 12 vor dem Abgas schützt. In dem Festelektrolyt 12 ist eine Referenzkammer 16 und eine zwischen der Referenzkammer 16 und der mit der Schutzschicht 14 versehenen Stirnseite angeordnete Meßkammer 18 ausgebildet. Die Referenzkammer 16 ist durch einen nicht dargestellten Kanal mit der Umgebung verbunden, so daß Luft aus der Umgebung in die Referenzkammer 16 einströmen kann. Die Meßkammer 18 ist durch einen Kanal 20 mit der nicht dargestellten Abgasanlage des Verbrennungsmotors verbunden, durch den Abgas in die Meßkammer 18 einströmen kann. In der Referenzkammer 16 ist eine aus Platin bestehende Elektrode 22 angeordnet, die an der zwischen der Referenzkammer 16 und der Meßkammer 18 ausgebildeten ersten Elektrolytschicht 24 befestigt ist. In der Meßkammer 18 ist eine gleichfalls aus Platin bestehende Doppelelektrode 26 aufgenommen, die sowohl an der ersten Elektrolytschicht 24 als auch an der zwischen der Meßkammer 18 und der Schutzschicht 14 ausgebildeten zweiten Elektrolytschicht 28 befestigt ist. An der Stirnseite der Breitbandsonde 10 ist schließlich eine Pumpelektrode 30 befestigt, die zur Meßkammer 18 ausgerichtet ist.

Die Elektrode 22, die erste Elektrolytschicht 24 und die Doppelelektrode 26 bilden eine Meßzelle 32, die auf dem Prinzip einer Nernstschen Konzentrationszelle arbeitet. Die Doppelelektrode 26 bildet gleichzeitig mit der zweiten Elektrolytschicht 28 und der Pumpelektrode 30 eine Pumpzelle 34, deren Arbeitsweise später noch erläutert wird. Des weiteren ist in der Breitbandsonde 10 benachbart zur Referenzkammer 16 eine Heizelektrode 36 in einer Heizkammer 38 aufgenommen, mit der der Festelektrolyt 12 auf seine Betriebstemperatur von etwa 600°C erwärmt werden kann.

Zur Messung der Sauerstoffkonzentration im Abgas wird an die Doppelelektrode 26 eine Referenzspannung U_{Ref} von beispielsweise 2,5 Volt angelegt. Sobald sich der Sauerstoffanteil in der Meßkammer 18 von dem Sauerstoffanteil in der Referenzkammer 16 unterscheidet, entsteht zwischen den beiden Grenzflächen der ersten Elektrolytschicht 24 eine elektrische Spannung U_{N}, die an der Elektrode 22 abgegriffen werden kann.

Wurde während des Betriebes des Verbrennungsmotors ein Gemisch in die Zylinder gefördert, dessen Luft-Kraftstoff-Verhältnis einem stöchiometrischen Luft-Kraftstoff-Verhältnis entspricht, d.h., daß die Luftzahl λ gleich 1 ist, ist der Restsauerstoffanteil im Abgas noch so hoch, daß die an der Elektrode 22 der Meßzelle 32 anliegende Spannung U_{N} bei etwa 450 mV liegt. Bei einer Verbrennung eines Gemisches mit Kraftstoffüberschuß nimmt dagegen der Sauerstoffanteil im Abgas ab, so daß die an der Elektrode 22 der Meßzelle 32 anliegende Spannung U_{N} größer als 450 mV ist. Wird dagegen ein Gemisch mit Luftüberschuß verbrannt, ist der Sauerstoffanteil in der Meßkammer 18 höher als bei einer Luftzahl λ gleich 1, so daß die an der Elektrode 22 anliegende Spannung U_{N} kleiner als 450 mV ist.

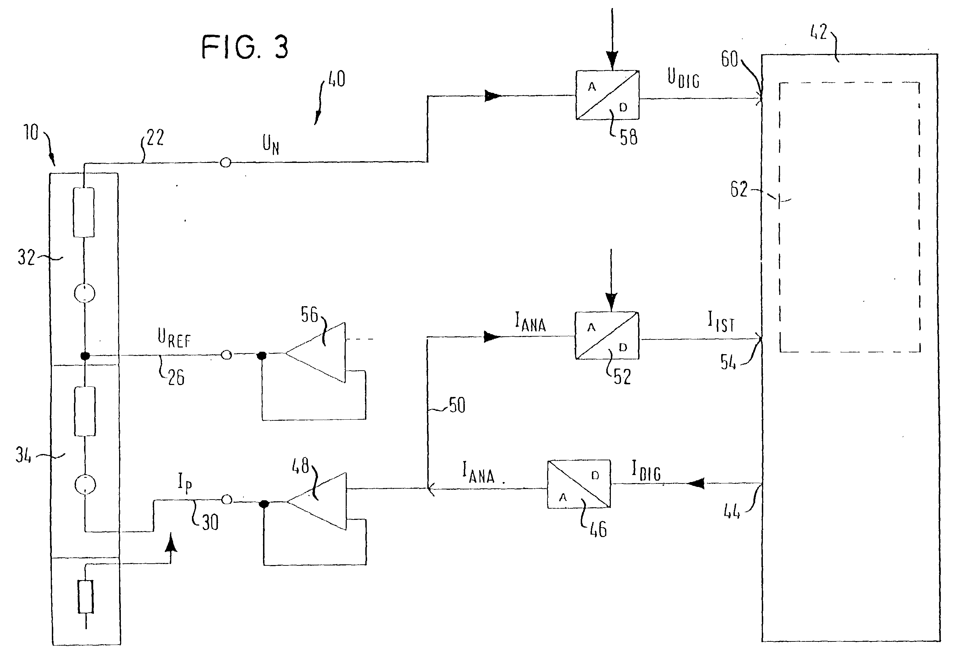

Bei der Breitbandsonde 10 wird mit Hilfe einer in Fig. 3 gezeigten zur elektronischen Regelung dienenden Anordnung 40, deren Aufbau später noch detailliert erläutert wird, mit Hilfe der Pumpzelle 34 der Anteil an Sauerstoffmolekülen in der Meßkammer 18 so eingestellt, daß die an der Elektrode 22 der Meßzelle 32 anliegende Spannung U_{N} in etwa diesem vorgegebenen Wert von 450 mV entspricht, bei dem die Luftzahl λ gleich 1 ist.

Nimmt der Sauerstoffanteil im Abgas ab, nimmt die an der Elektrode 22 der Meßzelle 32 anliegende Spannung U_{N} zu, was von der Anordnung 40 erfaßt wird. Daraufhin verändert die Anordnung 40 den an der Pumpelektrode 30 der Pumpzelle 34 anliegenden Strom I_{P}, so daß Sauerstoffionen in die Meßkammer 18 gefördert bzw. gepumpt werden. Die Konzentration an Sauerstoffionen in der Meßkammer 18 wird so lange erhöht, bis die an der Elektrode 22 der Meßzelle 32 anliegende Spannung U_{N} erneut ihrem vorgegebenen Wert von etwa 450 mV entspricht.

Nimmt dagegen der Sauerstoffgehalt in der Meßkammer 18 zu, wodurch die an der Elektrode 22 der Meßzelle 32 anliegende Spannung U_{N} abnimmt, wird die Polarität des in die Pumpelektrode 30 fließenden Stroms I_{P} umgekehrt, so daß Sauerstoffionen aus der Meßkammer 18 gefördert bzw. gepumpt werden. Der Pumpstrom I_{P} wird dabei so lange erhöht, bis die an der Elektrode 22 anliegende Spannung U_{N} wieder ihren vorgegebenen Wert von etwa 450 mV erreicht.

In Fig. 2 ist bezogen auf die Luftzahl λ der Verlauf des Pumpenstroms I_{P} gezeigt. Wie das Diagramm in Fig. 2 zeigt, kann die Anordnung 40 aufgrund des eingestellten Pumpstroms I_{P} ermitteln, welche Luftzahl λ und damit welches Luft-Kraftstoff-Verhältnis das unmittelbar zuvor verbrannte Gemisch aufgewiesen hat.

Fig. 3 zeigt die erfindungsgemäße Anordnung 40 im Detail, die mit der zuvor beschriebenen Breitbandsonde 10 verwendet wird. Die Anordnung 40 weist eine Regelungseinheit 42 auf, die einerseits zur Regelung der Breitbandsonde 10 und andererseits zur Regelung der Kraftstoffeinspritzung des Verbrennungsmotors dient. Die Regelungseinheit 42 ist mit einem ersten Ausgang 44 mit einem Digital-Analog-Wandler 46 verbunden, der das von der Regelungseinheit 42 übertragene Stellsignal I_{DIG} in ein analoges Stellsignal I_{ANA} umwandelt. An den Digital-Analog-Wandler 46 schließt sich ein erster Operationsverstärker 48 an, der seinerseits an die Pumpelektrode 30 der Pumpzelle 34 angeschlossen ist und das analoge Stellsignal I_{ANA} in den jeweils einzustellenden Pumpstrom I_{P} umwandelt.

Des weiteren ist zwischen dem Digital-Analog-Wandler 46 und dem ersten Operationsverstärker 48 eine Abzweigung 50 vorgesehen, die das analoge Stellsignal I_{ANA} einem Analog-Digital-Wandler 52 zuleitet, der an einen Eingang 54 der Regelungseinheit 42 angeschlossen ist und das analoge Stellsignal I_{ANA} erneut in ein digitales Istsignal I_{IST} umwandelt.

Die Doppelelektrode 26 der Breitbandsonde 10 ist an einen zweiten Operationsverstärker angeschlossen, der von einer nicht dargestellten Spannungsquelle angesteuert eine konstante Spannung von 2,5 V an der Doppelelektrode 26 anlegt.

Die Elektrode 22 der Breitbandsonde 10 steht mit einem zweiten Analog-Digital-Wandler 58 in Verbindung, der mit einem zweiten Eingang 60 der Regelungseinheit 42 in Verbindung steht und die an der Elektrode 22 anliegende Spannung U_{N} in ein digitales Meßsignal U_{DIG} umwandelt. Das digitale Meßsignal U_{DIG} wird anschließend vom zweiten Analog-Digital-Wandler 58 an die Regelungseinheit 42 weitergeleitet.

Bei der erfindungsgemäßen Anordnung 40 ist in der Regelungseinheit 42 eine programmierte Rechnereinheit 62 vorgesehen, mit der einerseits das digitale Stellsignal I_{DIG} erzeugt, andererseits das digitale Istsignal I_{IST} überprüft und das Meßsignal U_{DIG} auswertet wird.

Weicht die an der Meßzelle 32 anliegende Spannung U_{N} von einem vorgegebenen Wert ab, der im vorliegenden Fall bei einer Luftzahl λ gleich 1 bei etwa 450 mV liegt, wird entsprechend einem abgespeicherten Algorithmus von der Rechnereinheit 62 das digitale Stellsignal I_{DIG} so eingestellt, daß die an der Meßzelle 32 anliegende Spannung U_{N} im nachfolgenden Regelungsprozeß wieder ihren vorgegebenen Wert annimmt. Zu diesem Zweck wandelt der Digital-Analog-Wandler 46 das Stellsignal I_{DIG} in das analoge Stellsignal I_{ANA} um, mit dem der erste Operationsverstärker 48 betätigt wird. Der erste Operationsverstärker 48 verstellt entsprechend dem analogen Stellsignal I_{ANA} den an der Pumpelektrode 30 anliegenden Pumpstrom I_{P}, so daß die Konzentration der Sauerstoffionen in der Meßkammer 18 entweder angehoben oder abgesenkt wird. Durch das Anheben oder Absenken der Sauerstoffionen in der Meßkammer 18 ändert sich die an der Elektrode 22 der Meßzelle 32 anliegende Spannung U_{N}, die nach der Umwandlung durch den zweiten Analog-Digital-Wandler 58 als digitales Meßsignal U_{DIG} von der Recheneinheit 62 der Regelungseinheit 42 ausgewertet wird. Das während dieses Regelungsvorganges eingestellte analoge Stellsignal I_{ANA} wird von dem ersten Analog-Digital-Wandler 52 wieder in das digitale Istsignal I_{IST} umgewandelt, das von der Rechnereinheit 62 ausgewertet wird. Auf Grundlage des ausgewerteten Istsignals I_{IST} kann entsprechend der in Fig. 2 gezeigten Kurve die Luftzahl λ des Gemisches ermittelt werden, dessen Abgase nach der Verbrennung von der Breitbandsonde 10 zuvor erfaßt wurde.

Die Regelungseinheit 42 stellt dann, basierend auf dem digitalen Stellsignal I_{IST} das Luft-Kraftstoff-Verhältnis des dem Verbrennungsmotor nachfolgend zuzuführenden Gemisches neu ein, so daß die Luftzahl λ wieder gegen 1 geht. Dabei wird das Luft-Kraftstoff-Verhältnis kontinuierlich und in kleinen Schritten über einen vorgegebenen Zeitraum an das stöchiometrische Verhältnis wieder angeglichen, wobei der jeweils von der Regelungseinheit 42 eingestellte Pumpstrom I_{P} entlang der in Fig. 2 gezeigten Kurve wandert.

Die zuvor beschriebene Regelung eignet sich insbesondere für einen stationären Motorbetrieb, bei dem die Luftzahl λ innerhalb eines Bereiches von 0,95 bis 1,05 hin und her schwankt. Bei einem instationären Betrieb des Verbrennungsmotors, beispielsweise während des Beschleunigens oder des Abbremsens, verändert sich das Luft-Kraftstoff-Verhältnis des dem Verbrennungsmotor zuzuführenden Gemisches deutlich stärker, so daß die Luftzahl λ, beispielsweise wenn ein Gemisch mit hohem Kraftstoffanteil während eines Beschleunigungsvorganges eingespritzt wird, einen Wert von bis zu 0,7 annehmen kann, während beispielsweise während eines Bremsvorganges ein Gemisch mit hohem Luftanteil eingespritzt wird, bei dem die Luftzahl λ einen Wert von bis zu 1,3 annehmen kann.

Bei einem derartigen instationären Motorbetrieb wird von der Rechnereinheit 62 der Pumpstrom I_{P} für die Pumpzelle 34 auf einen Wert eingestellt, der einer Luftzahl λ entspricht, die ihrerseits dem von der Regelungseinheit 42 unmittelbar zuvor eingestellten Luft-Kraftstoff-Verhältnis des Gemisches entspricht, das dem Verbrennungsmotor gerade zugeleitet wird. Durch die gezielte Verstellung der Sauerstoffionenkonzentration in der Meßkammer 18 kommt es zu einer gewollten Verstellung der an der Elektrode 22 der Meßzelle 32 anliegenden Spannung U_{N}. Durch das gezielte Verstellen der Sauerstoffionenkonzentration in der Meßkammer 18 mit Hilfe der Pumpzelle 34 auf Grundlage des unmittelbar zuvor eingestellten Luft-Kraftstoff-Verhältnisses wird die Meßzelle 32 vorab auf einen Wert eingestellt, der dem durch dieses Gemisch entstehenden Abgas entspricht. Bei der nachfolgenden Regelung des Luft-Kraftstoff-Verhältnisses des dem Verbrennungsmotor weiter zugeführten Gemisches wird anschließend das Luft-Kraftstoff-Verhältnis basierend auf der an der Elektrode 22 der Meßzelle 32 anliegenden Spannung U_{N} bestimmt und entsprechend nachgeregelt. Durch dieses Verfahren der Regelung, bei der die an der Meßzelle 32 anliegende Spannung U_{N} und nicht der durch die Pumpzelle 34 fließende Pumpstrom I_{P} zur Nachregelung des Luft-Kraftstoff-Verhältnisses des Gemisches verwendet wird, arbeitet die Breitbandsonde 10 als herkömmliche Magersonde, bei der ausschließlich die als Nernstsche Konzentrationszelle ausgelegte Meßzelle 32 für die Regelung des Luft-Kraftstoff-Verhältnisses des Gemisches herangezogen wird. Die Konzentration der Abgaskomponente wird bei diesem Verfahren durch den Pumpstrom I_{P} solange auf einem Wert gehalten, daß die an der Meßzelle 32 anliegende Spannung U_{N} von ihrem vorgegebenen Wert abweicht, bis die Meßzelle 32 die tatsächliche Konzentration der Abgaskomponente des Gemisches erfaßt, aufgrund dessen Luft-Kraftstoff-Verhältnis der Pumpstrom I_{P} zum Verstellen der an der Meßzelle 32 anliegenden Spannung U_{N} verändert wurde. Sobald die Meßzelle 32 die Konzentration dieses Abgases erfaßt, wird der Pumpstrom I_{P} deaktiviert, damit die Meßzelle 32 in der Meßkammer 18 die Konzentration der Komponente des tatsächlichen Abgases erfassen kann.

Wenn sich der Verbrennungsmotor wieder in seinem stationären Motorbetrieb befindet, schaltet die Regelungseinheit 42 wieder auf das Regelungsverfahren zurück, bei dem die Luftzahl λ mit Hilfe des Pumpstroms I_{P} ermittelt und das Luft-Kraftstoff-Verhältnis des dem Verbrennungsmotor zuzuführenden Gemisches eingestellt wird.

Bei dem zuvor beschriebenen Verfahren wird ferner in Abhängigkeit von der einem vorausgegangenen Meßvorgang ermittelten Abgaskonzentration das Meßsignal U_{DIG} bzw. das Stellsignal I_{DIG} von der Rechnereinheit 32 wahlweise auf Grundlage von Proportionalitätsgleichungen, durch Integration und/oder durch Differentiation ausgewertet bzw. eingestellt. Diese auch als Vollinger-Regelung bekannte Regelung hat den Vorteil, daß entsprechend der jeweiligen Abweichung die Regelung wahlweise mit einem P-Glied, einem I-Glied oder einem D-Glied durchgeführt wird, je nachdem welches dieser Übertragungsglieder die schnellste Nachregelung ermöglicht.

Des weiteren ist es durch die zuvor beschriebene Anordnung möglich, in Abhängigkeit von der Dauer, die das Gemisch benötigt, um von der Einspritzanlage durch den Motor bis zur Abgassonde zu gelangen, für jeden einzelnen Zylinder des Verbrennungsmotors gezielt zu ermitteln, welches Luft-Kraftstoff-Verhältnis tatsächlich für den jeweils betreffenden Zylinder eingestellt worden ist, wodurch eine gezielte Nachregelung für jeden einzelnen Zylinder möglich wird, so daß die Abgasemissionen verringert und die Leistung der verschiedenen Zylinder aneinander angeglichen werden können.

### Bezugszeichenliste

- 10: Breitbandsonde
- 12: Festelektrolyt
- 14: Schutzschicht
- 16: Referenzkammer
- 18: Meßkammer
- 20: Kanal
- 22: Elektrode
- 24: erste Elektrolytschicht
- 26: Doppelelektrode
- 28: zweite Elektrolytschicht
- 30: Pumpelektrode
- 32: Meßzelle
- 34: Pumpzelle
- 36: Heizelektrode
- 38: Heizkammer

- 40: Anordnung
- 42: Regelungseinheit
- 44: erster Ausgang
- I_{DIG}: digitales Stellsignal
- 46: Digital-Analog-Wandler
- I_{ANA}: analoges Stellsignal
- 48: erster Operationsverstärker
- I_{P}: Pumpstrom
- 50: Abzweigung
- 52: erster Analog-Digital-Wandler
- I_{IST}: Istsignal
- 54: erster Eingang
- 56: zweiter Operationsverstärker
- U_{Ref}: Referenzspannung
- U_{N}: Spannung an der Meßzelle 32
- 58: zweiter Analog-Digital-Wandler
- U_{DIG}: Meßsignal
- 60: zweiter Eingang
- 62: Rechnereinheit

## Patentansprüche

1. Verfahren zur Regelung des Luft-Kraftstoff-Verhältnisses eines einem Verbrennungsprozeß zuzuführenden Gemisches, insbesondere in einem Verbrennungsmotor, die auf der Konzentration zumindest einer Komponente des während des Verbrennungsprozesses entstandenen Abgases basiert, wobei bei dem Verfahren die Konzentration der betreffenden Abgaskomponente erfaßt, entsprechend der erfaßten Konzentration ein Meßsignal (U_{N}) erzeugt,
das Meßsignal (U_{N}) anschließend ausgewertet,
und das Luft-Kraftstoff-Verhältnis des dem weiteren Verbrennungsprozeß zuzuführenden Gemisches nachgeregelt wird, wenn das ausgewertete Meßsignal (U_{N}) von einem vorgegebenen Wert abweicht,
**dadurch gekennzeichnet,**
**daß** die Auswertung des Meßsignals (U_{N}) durch einen programmierten Algorithmus erfolgt.

2. Verfahren nach Anspruch 1,
**dadurch gekennzeichnet,**
**daß** ein Stellsignal (I_{P}) erzeugt wird, mit dem die zu messende Konzentration der Abgaskomponente derart eingestellt wird, daß das Meßsignal (U_{N}) dem vorgegebenen Wert entspricht, und daß basierend auf dem erzeugten Stellsignal (I_{P}) das Luft-Kraftstoff-Verhältnis des dem weiteren Verbrennungsprozeß zuzuführenden Gemisches nachgeregelt wird.

3. Verfahren nach Anspruch 2,
**dadurch gekennzeichnet,**
**daß** das Stellsignals (I_{P}) durch den programmierten Algorithmus eingestellt wird.

4. Verfahren nach Anspruch 2 oder 3,
**dadurch gekennzeichnet,**
**daß** das Stellsignal (I_{P}) nach dem Auswerten des Meßsignals (U_{N}) erfaßt und mit Hilfe des programmierten Algorithmus zum Nachregeln des Luft-Kraftstoff-Verhältnisses des dem weiteren Verbrennungsprozeß zuzuführenden Gemisches ausgewertet wird.

5. Verfahren nach Anspruch 2, 3 oder 4,
**dadurch gekennzeichnet,**
**daß** die Nachregelung des Luft-Kraftstoff-Verhältnisses des dem weiteren Verbrennungsprozeß zuzuführenden Gemisches nur während eines zumindest annähernd stationären Verlaufes des Verbrennungsprozesses, bei dem die Luftzahl λ vorzugsweise in einem Bereich von etwa 0,95 bis 1,05 liegt, auf Grundlage des Stellsignals (I_{P}) erfolgt.

6. Verfahren nach einem der Ansprüche 2 bis 5,
**dadurch gekennzeichnet,**
**daß** bei einem instationären Verlauf des Verbrennungsprozesses, beim dem die Luftzahl λ vorzugsweise kleiner als 0,95 oder größer als 1,05 ist, das Stellsignal (I_{P}) vorab entsprechend der vorgenommenen Änderung des Luft-Kraftstoff-Verhältnisses des dem bisherigen Verbrennungsprozeß zugeführten Gemisches derart eingestellt wird, daß das Meßsignal (U_{N}) von seinem vorgegebenen Wert abweicht,
**daß** das Meßsignal (U_{N}) ausgewertet und mit dem vorgegebenen Wert verglichen wird, und
**daß** entsprechend der Abweichung des Meßsignals (U_{N}) von dem vorgegebenen Wert das Luft-Kraftstoff-Verhältnis des dem weiteren Verbrennungsprozeß zuzuführenden Gemisches auf ein vorgegebenes Verhältnis, vorzugsweise auf ein Verhältnis, bei dem die Luftzahl λ in einem Bereich von 0,95 bis 1,05 liegt, nachgeregelt wird.

7. Verfahren nach Anspruch 6,
**dadurch gekennzeichnet,**
**daß** das Stellsignal (I_{P}) solange die Konzentration der zu messenden Abgaskomponente verstellt, bis das Meßsignal (U_{N}) die tatsächliche Konzentration der Komponente des Abgases erfassen kann, das durch die Verbrennung des Gemisches entstanden ist, aufgrund dessen Luft-Kraftstoff-Verhältnis das Stellsignal (I_{P}) die Konzentration der zu messenden Abgaskomponente vorab verstellt hatte.

8. Verfahren nach einem der Ansprüche 2 bis 7,
**dadurch gekennzeichnet,**
**daß** das Stellsignal (I_{P}) vorab entsprechend der vorgenommenen Änderung des Luft-Kraftstoff-Verhältnisses des dem bisherigen Verbrennungsprozeß zugeführten Gemisches derart eingestellt wird, daß das Meßsignal (U_{N}) von seinem vorgegebenen Wert abweicht, daß nach dem Auswerten des Meßsignals (U_{N}) das Stellsignal (I_{P}) solange deaktiviert wird, bis das Meßsignal (U_{N}) die tatsächliche Konzentration des Abgases anzeigt, und
**daß**, sobald das Meßsignal (U_{N}) die tatsächliche Konzentration des Abgases erfaßt, das Stellsignal (I_{P}) erneut derart eingestellt wird, daß das Meßsignal (U_{N}) dem vorgegebenen Wert entspricht.

9. Verfahren nach einem der Ansprüche 1 bis 8,
**dadurch gekennzeichnet,**
**daß** das analoge Meßsignal (U_{N}) vor dem Auswerten in ein digitales Meßsignal (U_{DIG}) umgewandelt wird.

10. Verfahren nach einem der Ansprüche 2 bis 9,
**dadurch gekennzeichnet,**
**daß** das digitale Stellsignal (I_{DIG}) vor dem Einstellen der Konzentration in ein analoges Stellsignal (I_{P}) umgewandelt und gegebenenfalls verstärkt wird.

11. Verfahren nach einem der vorhergehenden Ansprüche,
**dadurch gekennzeichnet,**
**daß** der Algorithmus in Abhängigkeit von der einem vorausgegangenen Meßvorgang ermittelten Abgaskonzentration das Meßsignal (U_{N}) und/oder das Stellsignal (I_{P}) wahlweise auf Grundlage von Proportionalitätsgleichungen, durch Integration und/oder durch Differentiation auswertet bzw. einstellt.

12. Verfahren nach einem der vorhergehenden Ansprüche,
**dadurch gekennzeichnet,**
**daß** das Luft-Kraftstoff-Verhältnis des Gemisches durch Regeln der Kraftstoffzufuhr eingestellt wird.

13. Verfahren nach einem der vorhergehenden Ansprüche,
**dadurch gekennzeichnet,**
**daß** das Verfahren bei einem Verbrennungsmotor eingesetzt wird, wobei vorzugsweise für jeden Zylinder das Luft-Kraftstoff-Verhältnis des dem jeweiligen Zylinder zuzuführenden Gemisches nachgeregelt wird.

14. Anordnung zur Regelung des Luft-Kraftstoff-Verhältnisses eines einem Verbrennungsprozeß zuzuführenden Gemisches, insbesondere in einem Verbrennungsmotor, mit einer Abgassonde (10) zum Erzeugen eines die Konzentration zumindest einer Komponente des während des Verbrennungsprozesses entstandenen Abgases anzeigenden Meßsignals (U_{N}), und mit einer Regelungseinheit (42) zum Nachregeln des Luft-Kraftstoff-Verhältnisses des dem weiteren Verbrennungsprozeß zuzuführenden Gemisches bei einer Abweichung des Meßsignals (U_{N}) von einem vorgegebenen Wert,
**dadurch gekennzeichnet,**
**daß** die Abgassonde (10) zur Signalübertragung mit der Regelungseinheit (42) verbunden ist, und daß die Regelungseinheit (42) eine programmierbare Rechnereinheit (62) zum Auswerten des Meßsignals (U_{N}) aufweist.

15. Anordnung nach Anspruch 14,
**dadurch gekennzeichnet,**
**daß** zwischen der Abgassonde (10) und der Regelungseinheit (42) ein Analog-Digital-Wandler (58) zum Umwandeln des analogen Meßsignals (U_{N}) in ein digitales Meßsignal (U_{DIG}) angeordnet ist.

16. Anordnung nach Anspruch 14 oder 15,
**dadurch gekennzeichnet,**
**daß** die Abgassonde eine Breitbandsonde (10) ist, die eine Referenzkammer (16), die mit der Umgebungsluft in Strömungsverbindung steht, eine Meßkammer (18), die mit der Abgasleitung in Strömungsverbindung steht, eine zwischen der Referenzkammer (16) und der Meßkammer (18) angeordnete, die Konzentration der Abgaskomponente erfassende Meßzelle (32), die das Meßsignal (U_{N}) erzeugt, und eine Pumpzelle (34) aufweist, mit der die Konzentration der in der Meßkammer (18) befindlichen Abgaskomponente einstellbar ist.

17. Anordnung nach Anspruch 16,
**dadurch gekennzeichnet,**
**daß** die Pumpzelle (34) zum Einstellen der Abgaskonzentration in der Meßkammer (18) von der Regelungseinheit (42) ansteuerbar ist.

18. Anordnung nach Anspruch 16 oder 17,
**dadurch gekennzeichnet,**
**daß** zwischen der Regelungseinheit (42) und der mit dieser verbundenen Pumpzelle (34) ein Digital-Analog-Wandler (46) zum Umwandeln eines von der Regelungseinheit (42) zum Einstellen der Pumpzelle (34) abgegebenen digitalen Stellsignals (I_{DIG}) in ein analoges Stellsignal (I_{ANA}, I_{P}) angeordnet ist.

19. Anordnung nach Anspruch 18,
**dadurch gekennzeichnet,**
**daß** zwischen dem Digital-Analog-Wandler (46) und der Pumpzelle (34) eine Abzweigung (50) vorgesehen ist, die das analoge Stellsignal (I_{ANA}, I_{P}) wieder an die Regelungseinheit (42) zurückführt, wobei in der Abzweigung (50) ein Analog-Digital-Wandler (52) zum Umwandeln des analogen Stellsignals (I_{ANA}, I_{P}) in ein digitales Istsignal (I_{IST}) vorgesehen ist.

20. Anordnung nach einem der Anspruch 16 bis 19,
**dadurch gekennzeichnet,**
**daß** die Meßzelle (32) und die Pumpzelle (34) eine gemeinsame Elektrode (26) aufweisen, und daß die Elektrode (26) an eine Referenzspannungsquelle (56) angeschlossen ist.

21. Anordnung nach einem der Ansprüche 14 bis 20,
**dadurch gekennzeichnet,**
**daß** die Regelungseinheit (42) zum Nachregeln des dem Gemisch zuzuführenden Kraftstoffes dient.
